# EUROPÄISCHE PATENTSCHRIFT

(11) **EP 3 877 140 B1**
(45) Veröffentlichungstag und Bekanntmachung des Hinweises auf die Patenterteilung: **10.12.2025**
(21) Anmeldenummer: 19798295.2
(22) Anmeldetag: 05.11.2019
(51) Int. Cl.: B29C 48/92, B29C 48/31, B29C 48/08, B29C 48/21, B29D 7/01

(54) **VERFAHREN UND VORRICHTUNG FÜR DIE KONTROLLE EINES DICKENPROFILS EINER FOLIENBAHN**
PROCESS AND APPARATUS TO CONTROL THE THICKNESS PROFILE OF A FILM
PROCÉDÉ ET APPAREIL POUR CONTRÔLER LE PROFIL D'ÉPAISSEUR D'UN FILM

(30) Priorität: 06.11.2018 DE 102018127671
(43) Veröffentlichungstag der Anmeldung: 15.09.2021
(73) Patentinhaber: Windmöller & Hölscher KG, 49525 Lengerich (DE)
(72) Erfinder: SCHMITZ, Torsten, 49525 Lengerich (DE); COLELL, Waldemar, 49525 Lengerich (DE); GROEPPER, Bernd-Alexander, 49525 Lengerich (DE)
(86) Internationale Anmeldenummer: PCT/EP2019/080227
(87) Internationale Veröffentlichungsnummer: WO 2020/094635

(56) Entgegenhaltungen:
- JP-A- 2001 310 372
- JP-A- 2002 096 371
- JP-A- H01 232 018
- JP-A- H07 329 147
- JP-A- H08 267 536
- US-A1- 2002 175 434

## Beschreibung

Die vorliegende Erfindung betrifft ein Verfahren für die Kontrolle eines Dickenprofils einer Folienbahn sowie eine Kontrollvorrichtung für die Durchführung eines solchen Verfahrens.

Es ist bekannt, dass Flachfolienmaschinen eingesetzt werden, um Folienprodukte herzustellen. Hierfür sind die Flachfolienmaschinen mit einer Vielzahl von Extrusionsvorrichtungen ausgestaltet, welche in der Lage sind, einzelne Schichten der Folienbahn mit ähnlichen, gleichen oder unterschiedlichen fließfähigen Extrusionsmaterialien zur Verfügung zu stellen. In Summe wird die Folienbahn eine Vielzahl von unterschiedlichen Schichten aufweisen, sodass je nach Materialzusammensetzung und Schichtzusammensetzung die Folienbahn eine unterschiedliche Qualität mit unterschiedlichen Funktionseigenschaften aufweisen kann. Entscheidend für die Qualität der hergestellten Folienbahn ist dabei unter anderem eine definierte Dickenverteilung der Folienbahn in Längsrichtung wie auch in Querrichtung. Insbesondere in Querrichtung, bezogen auf die Förderrichtung der Folienmaschine bzw. die Produktionsrichtung der Folienmaschine, sind Dickensprünge im Dickenprofil riskant bzw. führen zu Qualitätseinbußen. Da üblicherweise die flache Folienbahn anschließend auf eine Wickelwelle aufgewickelt wird, können sich auch geringe Differenzen im Dickenprofil aufsummieren, da diese immer an derselben Stelle übereinandergelegt werden beim Aufwickeln. Dabei besteht die Gefahr, dass sogenannte Kolbenringe entstehen, welche die Folie hinsichtlich ihrer Qualität minderwertig ausgestalten oder sogar die Folienbahn unbrauchbar machen. Zusätzlich ist es auch möglich die Schmelze zu beschichten oder zu kaschieren. So kann beispielsweise hierfür eine oder mehrere Flachbahnen der Schmelze zugeführt werden.

Wie aus den Druckschriften JP 2001 310372 A, US 2002/175434 A1, JP H07 329147 A und JP 2002 096371 A zu entnehmen ist, werden bei bekannten Lösungen ein Dickenprofil in Querrichtung der Folienbahn manuell oder automatisch überwacht und entsprechend über Stellmittel an einer Austrittsdüse der Folienvorrichtung angepasst. Über ein oder mehrere Kontrolleingriffe kann an Stellmitteln, zum Beispiel in Form von Thermobolzen, eine Variation des Düsenaustrittsspaltes an einer solchen Austrittsdüse erfolgen. Das Beaufschlagen einer definierten Vorgabetemperatur, elektrischer Vorgabespannung oder Heizzeit als Kontrolleingriff kann zum thermischen Ausdehnen des jeweiligen Stellbolzens führen, sodass dieser durch mechanische Einwirkung auf eine Düsenlippe den Austrittsspalt reduziert. Bei einer Reduktion der Temperatur an einem solchen Stellbolzen findet der umgekehrte Vorgang statt.

Nachteilhaft bei den bekannten Lösungen ist es, dass Querauswirkungen beim Stellen der Stellmittel nicht oder nur in manueller Weise berücksichtigt werden. Mit anderen Worten wird ausschließlich an der Stelle, an welcher beim Dickenprofil ein erwünschter Effekt erzielt werden soll, auch eine Kontrolle der Stellmittel durchgeführt.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine schnellere, effizientere und/oder bessere Kontrollmöglichkeit für das Dickenprofil der Folienbahn zur Verfügung zu stellen.

Die voranstehende Aufgabe wird gelöst durch ein Verfahren mit den Merkmalen des Anspruchs 1 sowie eine Kontrollvorrichtung mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Kontrollvorrichtung und jeweils umgekehrt, sodass bezüglich der Offenbarung zu den einzelnen Erfindungsaspekten stets wechselseitig Bezug genommen wird bzw. werden kann.

Erfindungsgemäß dient ein Verfahren der Kontrolle eines Dickenprofils einer Folienbahn entlang einer Querrichtung mittels einer Vielzahl von Stellmitteln zum Stellen einer Spaltöffnung einer Austrittsdüse einer Flachfolienmaschine. Hierfür weist das Verfahren die folgenden Schritte auf:
- Erfassen des Dickenprofils entlang der Querrichtung der Folienbahn quer zu einer Produktionsrichtung der Flachfolienmaschine,
- Vergleich wenigstens eines Teilabschnitts des erfassen Dickenprofils mit einem Vorgabeprofil,
- Bestimmen zumindest einer lokalen Profilabweichung in einem Abweichungsabschnitt als Ergebnis des Vergleichs,
- Erzeugen wenigstens eines Kontrolleingriffs für die Verstellung von wenigstens einem Stellmittel in einem vom Abweichungsabschnitt unterschiedlichen Eingriffsabschnitt.

Ein erfindungsgemäßes Verfahren zielt also in bekannter Weise darauf ab, eine Kontrolle des Dickenprofils einer Folienbahn zu gewährleisten. Insbesondere sollen dabei entsprechende Vorgabewerte bzw. Vorgabeprofile eingehalten werden. Dies erlaubt es, gleich den bekannten Verfahren, das Dickenprofil bzw. Profilabweichungen in gewissen Grenzen zu halten, sodass die Qualität der Folienbahn hohen Qualitätsansprüchen genügt. Insbesondere können Profilabweichungen oberhalb der entsprechenden Profilvorgabe vermieden oder reduziert werden, sodass das Ausbilden von sogenannten Kolbenringen oder von unerwünschten Dickstellen und/oder Dünnstellen in Randabschnitten der Folienbahn, wie sie eingangs erläutert worden sind, vermieden werden kann.

Im Unterschied zu den bisher eingesetzten Kontrollmöglichkeiten basiert jedoch ein erfindungsgemäßes Verfahren auf einer definierten Unterscheidung des Ortes der lokalen Profilabweichung einerseits und des Ortes des Kontrolleingriffs für die Verstellung von wenigstens einem Stellmittel andererseits. Bei der Überwachung des Dickenprofils erfolgt im Wesentlichen eine kontinuierliche Überwachung. So kann auf der gesamten Breite der Folienbahn gleichzeitig oder aber auch verschiebend in Querrichtung sequenziell die Messung des Dickenprofils erfolgen. Die entsprechende Bestimmung kann auf unterschiedlichste Weise erfolgen, zum Beispiel durch Transmissionssensoren, durch Rückkopplung aus den Temperaturinformationen der Folienbahn auf einer Kühlwalze oder durch andere Dickenmesssysteme. Sobald das Dickenprofil in Querrichtung vollständig ist, wird die Erfassung wiederholt durchgeführt, sodass im Sinne der vorliegenden Erfindung eine kontinuierliche oder im Wesentlichen kontinuierliche Erfassung des Dickenprofils entlang der Querrichtung möglich ist.

Durch die entsprechende Bestimmungsmöglichkeit und durch den Vergleich mit dem Vorgabeprofil wird es möglich, das Dickenprofil in einzelnen lokalen Abschnitten hinsichtlich der Güte des Dickenprofils zu bewerten. Sobald in einem lokalen Abschnitt die Profilabweichung zum Vorgabeprofil groß ist bzw. außerhalb des Vorgabeprofils liegt, kann als Ergebnis dieser lokale Abschnitt der Profilabweichung als Abweichungsabschnitt im Sinne der vorliegenden Erfindung als Ergebnis des Vergleichs definiert werden. Basierend auf der lokalen Profilabweichung wird also zusätzlich der Ort dieser lokalen Profilabweichung in Form des Abweichungsabschnitts als Basis für den nachfolgenden Kontrolleingriff eingesetzt. Dieser folgende Kontrolleingriff wird nun erzeugt zum einen auf Basis der lokalen Profilabweichung, also zum Beispiel qualitativ, ob es sich hier um eine Dünnstelle oder eine Dickstelle in unerwünschter Weise im Dickenprofil handelt, und zusätzlich noch durch den Ort der lokalen Profilabweichung. Im Gegensatz zu bekannten Lösungen erfolgt nämlich der Kontrolleingriff nun nicht oder zumindest nicht ausschließlich innerhalb des Abweichungsabschnitts, sondern vielmehr in einem Eingriffsabschnitt, welcher sich vom Abweichungsabschnitt unterscheidet. Dabei ist noch darauf hinzuweisen, wie dies später noch detailliert erläutert wird, dass der Eingriffsabschnitt und der Abweichungsabschnitt selbstverständlich gemeinsame Abschnitte in überlappender Weise aufweisen können. Bevorzugt sind jedoch Lösungen, wie sie später noch erläutert werden, bei denen der Eingriffsabschnitt separat oder im Wesentlichen separat vom Abweichungsabschnitt ausgebildet ist.

Erfindungsgemäß wird es also nun möglich, an einer anderen Stelle einen Kontrolleingriff einzubringen, als dem Ort der lokalen Profilabweichung. Damit wird eine Vielzahl von neuen Kontrollmöglichkeiten gegeben. Insbesondere wird es möglich, Querbeziehungen, also die Einflussnahme von Stellmitteln auf benachbarte Bereiche des Dickenprofils, im Kontrolleingriff zu berücksichtigen. Um dies zu erläutern, wird nachfolgend kurz beispielhaft eine solche Stellsituation beschrieben. Erkennt die Kontrolle gemäß dem vorliegenden Verfahren eine Dünnstelle im Dickenprofil, welche eine lokale Profilabweichung oberhalb des Vorgabeprofils aufweist, so führt dies zu einem entsprechenden Kontrolleingriff. Ziel dieses Kontrolleingriffs ist es, diese unerwünschte Dünnstelle wieder zu vermeiden, also genau in diesem lokalen Abschnitt der Profilabweichung, nämlich dem Abweichungsabschnitt, eine Verstärkung der Dicke, also eine Aufdickung zur Verfügung zu stellen. Hierfür muss in diesem Abweichungsabschnitt mehr Material hinfließen, als dies zur Bestimmung des Dickenprofils der Fall war. Erfindungsgemäß kann nun der Kontrolleingriff wenigstens ein Stellmittel neben diesem Abweichungsabschnitt so stellen, dass eine Reduktion des Düsenaustrittsspaltes neben dieser Dünnstelle zur Verfügung gestellt oder erzeugt wird. Die Reduktion des Düsenaustrittsspaltes führt nun im Eingriffsabschnitt dazu, dass dort weniger fließfähiges Extrusionsmaterial der Folienbahn austreten kann. Vielmehr verteilt sich bei gleichem Volumenstrom des Extrusionsmaterials, das auf diese Weise verdrängte Extrusionsmaterial auf die Abschnitte neben dem Eingriffsabschnitt, insbesondere zur linken und zur rechten Seite. Dadurch, dass der Kontrolleingriff diese Nachbarschaftsbeziehung zwischen Eingriffsabschnitt und Abweichungsabschnitt bei der Auswahl des Stellmittels und bei der Definition des Eingriffsabschnitts berücksichtigt hat, fließt nun das verdrängte Extrusionsmaterial in den Bereich des Abweichungsabschnitts und führt dort zu dem gewünschten Auffüllen der Dünnstelle.

Es kann also zusammengefasst werden, dass im Rahmen der vorliegenden Erfindung explizit an einer anderen Position eingegriffen wird durch den Kontrolleingriff als der Ort der Abweichung in Form der lokalen Profilabweichung. Diese Querkorrelation, also diese örtlich versetzte Anordnung des Kontrolleingriffs führt sowohl in qualitativer als auch in quantitativer Weise dazu, besser, schneller und effizienter die lokalen Profilabweichungen aufzuheben.

Insbesondere können die Quereinflüsse beim Durchführen des Kontrolleingriffs vorab ermittelt und im Kontrolleingriff selbst berücksichtigt werden, sodass eine unerwünschte Kontrollschwingung bzw. Regelschwingungen reduziert oder sogar gänzlich vermieden werden kann.

Erfindungsgemäß ist es von Vorteil, wenn bei dem erfindungsgemäßen Verfahren der Eingriffsabschnitt entlang der Querrichtung eine unterschiedliche Erstreckung, insbesondere eine größere Erstreckung als der Abweichungsabschnitt aufweist. Das führt dazu, dass eine großflächige Verstellung möglich ist, damit eine kontinuierliche und vor allem sanftere Einflussnahme durch die großflächige Verstellung von vielen Stellmitteln zur Verfügung gestellt werden kann. Während bei bekannten Lösungen eine geringe Anzahl von Stellmitteln einen großen Einfluss auf die entsprechende lokale Profilabweichung zur Verfügung stellen musste, kann nun mit separaten Eingriffsabschnitten eine deutlich größere Streckung zur Verfügung gestellt werden, sodass mit geringerem Stellhub an den Stellmitteln die sanftere und vor allem schwingungsärmere Einregelung des Kontrolleingriffs bzw. die Reduktion der lokalen Profilabweichung ermöglicht wird.

Vorteilhaft ist es darüber hinaus, wenn bei einem erfindungsgemäßen Verfahren im Eingriffsabschnitt wenigstens zwei Stellmittel durch das Kontrollmittel verstellt werden, insbesondere mit unterschiedlicher Stellqualität. So sind die einzelnen Stellmittel insbesondere in Form von Thermobolzen nebeneinander in gleichmäßigen oder im Wesentlichen gleichmäßigen Abständen angeordnet. Das Ansprechen von zwei oder mehr Stellmitteln führt nun dazu, dass insbesondere in Kombination mit einer größeren Erstreckung gemäß dem voranstehenden Absatz für den Eingriffsabschnitt die abgestufte Verstellung bzw. ein sanftes Anpassen der Verstellung möglich wird. Eine unterschiedliche Stellqualität kann zum Beispiel dazu führen, dass unterschiedlich stark auf die einzelnen Eingriffsabschnitte die Kontrolleingriffe ausgeführt werden, sodass stufenweise oder mit unterschiedlichem Hub die Verstellung zu einem sanfteren Übergang zwischen geregelten und ungeregelten Bereichen führen kann.

Vorteile bringt es darüber hinaus mit sich, wenn bei einem erfindungsgemäßen Verfahren der Eingriffsabschnitt mit dem Abweichungsabschnitt in Querrichtung der Folienbahn überlappt. Darunter ist zu verstehen, dass der Abweichungsabschnitt und der Eingriffsabschnitt miteinander einen gemeinsamen Überlappungsabschnitt aufweisen. Der gesamte Stelleingriff wird zwar im Eingriffsabschnitt und damit zumindest teilweise neben dem Abweichungsabschnitt ausgeübt, jedoch kann hier sozusagen ein kontinuierlicher Übergang zwischen Abweichungsabschnitt und Eingriffsabschnitt zur Verfügung gestellt werden, sodass insbesondere im Bereich des Abweichungsabschnitts Raum für Material der Schmelze bleibt. Bei dieser Ausführungsform ist der Abweichungsabschnitt jedoch zumindest teilweise frei von einem solchen Kontrolleingriff ausgebildet, sodass entsprechend Raum bleibt, um Schmelzematerial zur Verfügung zu stellen bei dem Verschieben in benachbarte Bereiche bzw. um Schmelzematerial aufzunehmen durch ein Verschieben von den benachbarten Bereichen her.

Weitere Vorteile sind erzielbar, wenn bei einem erfindungsgemäßen Verfahren der Eingriffsabschnitt direkt oder im Wesentlichen direkt an den Abweichungsabschnitt in Querrichtung der Folienbahn angrenzt. Dieses direkte bzw. seitlich benachbarte Angrenzen führt dazu, dass insbesondere in einer Kombination eines solchen Angrenzens auf beiden Seiten sozusagen ein Einschließen des Abweichungsabschnitts durch den Eingriffsabschnitt zur Verfügung gestellt wird. Damit können lokale Abweichungen kompakt und in synchroner Weise kontrolliert bzw. gesteuert und/oder geregelt werden. Das direkte Angrenzen führt darüber hinaus zu einer einfacheren und direkten Korrelationsmöglichkeit zwischen der Eingriffssituation und der Abweichungssituation.

Vorteile bringt es weiter mit sich, wenn bei einem erfindungsgemäßen Verfahren der Eingriffsabschnitt vom Abweichungsabschnitt in Querrichtung der Folienbahn beabstandet ist. Dabei handelt es sich sozusagen um einen Sicherheitsabstand zwischen der lokalen Abweichungsstelle und dem Eingriffsabschnitt, um ein unerwünschtes Überregeln oder Einschwingen der Regelung zu vermeiden bzw. zu reduzieren. Es sei noch darauf hingewiesen, dass selbstverständlich die unterschiedlichen Korrelationen, wie Überlappung, direktes Angrenzen und Beabstanden zwischen Eingriffsabschnitt und Abweichungsabschnitt selbstverständlich innerhalb eines Regelungsverfahrens auch zeitlich oder örtlich kombiniert eingesetzt werden. So ist es denkbar, dass der Kontrolleingriff je nach tatsächlicher lokaler Profilabweichung selbst unterscheiden bzw. entscheiden kann, wie weit der Eingriffsabschnitt vom Abweichungsabschnitt beabstandet sein soll. Gleiches gilt selbstverständlich auch für die Positionierung und die geometrische Größe des Eingriffsabschnitts in Relation zum Abweichungsabschnitt.

Ebenfalls von Vorteil ist es, wenn bei einem erfindungsgemäßen Verfahren im Eingriffsabschnitt eine Gruppe von wenigstens zwei benachbarten Stellmitteln durch den Kontrolleingriff verstellt werden. Eine solche gruppenweise Verstellung kann mit quantitativ und/oder qualitativ gleichen oder unterschiedlichen Stellrichtungen einhergehen. Dabei ist selbstverständlich auch grundsätzlich das Auslassen eines Stellbolzens zwischen zwei benachbarten Stellmitteln möglich. Die benachbarte Kontrolle von Stellmitteln führt jedoch zu einer verbesserten kontinuierlichen Verstellung, sodass die erfindungsgemäßen Vorteile und insbesondere die Reduktion des Regelschwingens noch weiter verbessert werden können.

Vorteilhaft ist es darüber hinaus, wenn bei einem erfindungsgemäßen Verfahren der Kontrolleingriff auf wenigstens zwei Eingriffsabschnitte auf unterschiedlichen Seiten des Abweichungsabschnitts in Querrichtung einwirkt. Darunter ist eine beidseitige Einflussnahme zu verstehen, sodass die Kontrolle sozusagen den Abweichungsabschnitt beidseitig einsperrt bzw. einschließt. Ein unerwünschtes seitliches Querverschieben über den Abweichungsabschnitt hinaus kann auf diese Weise vermieden werden. Handelt es sich bei der lokalen Profilabweichung zum Beispiel um eine Dünnstelle, so wird durch Nachregeln von Stellmitteln auf beiden Seiten dieser Dünnstelle nun Extrusionsmaterial bzw. Schmelzematerial von beiden Seiten dieser Dünnstelle in den Bereich der lokalen Profilabweichung hineingedrückt. Somit wird sichergestellt, dass das von der Seite in die Dünnstelle hinein verdrängte Schmelzematerial nicht auf der anderen Seite der Dünnstelle wieder hinausgedrückt wird, und dort möglicherweise unerwünschte Kontrollergebnisse zur Verfügung stellen würde. Die Anordnungen auf beiden Seiten des Abweichungsabschnitts erlaubt es also, die lokalen Ergebnisse und Auswirkungen des Kontrolleingriffs besser zu spezifizieren und von unerwünschter Verbreiterung der Kontrollwirkung zu unterscheiden. Alternativ kann auch umgekehrt ein gemeinsamer Eingriffsabschnitt zwischen zwei Abweichungsabschnitten angeordnet werden. Mit anderen Worten kann also mit einem gemeinsamen Eingriffsabschnitt beidseitig zu diesem in zwei separate Abweichungsabschnitte eingegriffen werden. Dies kann insbesondere für eine Kontrolle eines Dickenprofils in den beiden Randabschnitten der Folienbahn eingesetzt werden. Diese Eingriffswirkung ist insbesondere ebenfalls symmetrisch zur Produktionsrichtung der Folienbahn.

Ein weiterer Vorteil kann erzielt werden, wenn bei einem erfindungsgemäßen Verfahren der Kontrolleingriff und/oder die wenigstens zwei Eingriffsabschnitte symmetrisch oder im Wesentlichen symmetrisch in Querrichtung zu dem Abweichungsabschnitt ausgebildet sind. Somit kann also auch ein symmetrischer oder im Wesentlichen symmetrischer Kontrolleingriff zur Verfügung gestellt werden. Die Kontrollmöglichkeit, wie auch die Vorhersagbarkeit können auf diese Weise verbessert werden. Die Symmetrie kann sich dabei zum einen auf den Ort, die Geometrie und die Beabstandung der Kontrolleingriffe bzw. der Eingriffsabschnitte beziehen, wie aber auch auf die Qualität und/oder Quantität der Verstellung der Stellmittel selbst.

Ebenfalls vorteilhaft ist es, wenn bei einem erfindungsgemäßen Verfahren der Abweichungsabschnitt frei von einem eigenen Kontrolleingriff bleibt. Mit anderen Worten ist der Abweichungsabschnitt kontrollfrei bzw. stellfrei ausgebildet, sodass das Kontrollergebnis ausschließlich durch einen Kontrolleinfluss von den benachbarten Eingriffsabschnitten zur Verfügung gestellt wird. Dies erlaubt es, eine genauere und verbesserte Vorhersagbarkeit zur Verfügung zu stellen, da unterschiedliche Kontrolleingriffe sich nicht oder nur teilweise überlagern.

Weiter vorteilhaft kann es sein, wenn bei einem erfindungsgemäßen Verfahren der Abweichungsabschnitt einen eigenen Kontrolleingriff aufweist. Dabei ist noch darauf hinzuweisen, dass selbstverständlich die Kombination von kontrollfrei und Kontrolleingriff im Abweichungsabschnitt an unterschiedlichen lokalen Profilabweichungen bzw. zu unterschiedlichen Zeiten im Sinne eines vorliegenden Verfahrens zur Verfügung gestellt werden kann. Selbstverständlich können die unterschiedlichen Abweichungen an einer Folienbahn zu unterschiedlichen Zeiten und/oder zu unterschiedlichen Orten jeweils spezifisch mit einem entsprechenden Kontrolleingriff belegt werden.

Ein weiterer Vorteil ist es, wenn bei einem erfindungsgemäßen Verfahren wenigstens zwei Kontrolleingriffe an zwei unterschiedlichen Eingriffsabschnitten zeitlich parallel oder zumindest zeitlich überlappend durchgeführt werden. Eine solche zeitliche Überlappung erlaubt es, unterschiedliche Kontrolleingriffe miteinander zu korrelieren, deren Kontrollergebnis miteinander zu vergleichen bzw. eine Berücksichtigung dieser verschiedenen Kontrolleingriffe für eine synchrone Regelung zur Verfügung zu stellen. Bei mehreren lokalen Dickenabweichungen führt dies zu einer schnelleren Anpassung bzw. einer schnelleren Verbesserung des Dickenprofils.

Vorteilhaft ist es weiter, wenn bei einem erfindungsgemäßen Verfahren bei wenigstens zwei bestimmten lokalen Profilabweichungen eine Priorisierung der notwendigen Kontrolleingriffe erfolgt. Es kann also die Stelle der lokalen Profilabweichung mit dem maximalen Schadpotenzial definiert werden, um hier mit höchster Priorität den Kontrolleingriff zur Verfügung zu stellen. Auch ist es möglich, dieses Schadpotenzial auf die Stabilität der Produktion und/oder die Qualität des Folienproduktes zu beziehen. Selbstverständlich kann die Priorisierung auch von weiteren Parametern, wie zum Beispiel der Gesamtdicke des Dickenprofils, abhängen. So ist beispielsweise im Randabschnitt einer Folienbahn bei einer dicken Folie eine unerwünschte Dickstelle mit höherem Schadpotenzial versehen, während bei einer besonders dünnen Folie eine entsprechende Dünnstelle das höchste Schadpotenzial aufweist.

Ebenfalls wird bei dem erfindungsgemäßen Verfahren beim Erzeugen des Kontrolleingriffs ein zeitlich vorgelagerter erfolgter Kontrolleingriff berücksichtigt.

Dies kann hinsichtlich des Ortes und/oder des Ergebnisses dieses Kontrolleingriffs zur Verfügung gestellt sein. So kann die vorherige Wirkung eines Kontrolleingriffs verwendet werden, um hier sogar aktiv auf unerwünschtes Kontrollschwingen bzw. Regelschwingen einzuwirken. Ein paralleler Eingriff an einer anderen Stelle kann dabei ebenfalls zeitlich in der Erzeugung des Kontrolleingriffs Berücksichtigung finden.

Vorteilhaft ist es weiter, wenn bei einem erfindungsgemäßen Verfahren beim Erzeugen des Kontrolleingriffs der zeitliche Verlauf des Dickenprofils berücksichtigt wird. So kann zum einen aus dem bisherigen Verlauf des Dickenprofils und insbesondere auch in Kombination mit den bereits erzeugten Kontrolleingriffen ein Lerneffekt erzielt werden, welcher in entsprechenden Datenbanken zurückgespeichert werden kann. Insbesondere ist es jedoch auch möglich, den Gradienten des Dickenprofils, also die Veränderung der Abweichung über die Zeit und damit die Änderungsgeschwindigkeit zu berücksichtigen. Dies ist insbesondere hinsichtlich einer Priorisierung des Kontrolleingriffs bzw. der Auswahl von Qualität und Quantität von Vorteil, um noch gezielter und wirkungsvoller den Kontrolleingriff erzeugen zu können.

Weitere Vorteile sind erzielbar, wenn bei einem erfindungsgemäßen Verfahren bei der Erzeugung des Kontrolleingriffs der Zeitbedarf für die Verstellung der Stellmittel berücksichtigt wird. So werden zum Beispiel als Stellmittel sogenannte Thermobolzen eingesetzt, welche mit einer Temperatur beaufschlagt werden, und auf diese Weise eine Erhöhung der Temperatur mit einer thermischen Ausdehnung der Stellmittel erzeugen. Dies erlaubt es, einfach und kostengünstig den Kontrolleingriff auszuüben, jedoch führt dies zu einer zeitlichen Verzögerung, bis die thermische Ausdehnung den gewünschten Wert erreicht hat. Dieser Zeitbedarf kann erfindungsgemäß als Regellatenz oder Kontrolllatenz bei der Erzeugung des Kontrolleingriffs berücksichtigt werden.

Ebenfalls Gegenstand der vorliegenden Erfindung ist eine Kontrollvorrichtung für die Durchführung eines Verfahrens für die Kontrolle eines Dickenprofils einer Folienbahn entlang einer Querrichtung mittels einer Vielzahl von Stellmitteln zum Stellen einer Spaltöffnung einer Austrittsdüse der Flachfolienmaschine. Eine solche Kontrollvorrichtung weist ein Erfassungsmodul für ein Erfassen eines Dickenprofils und/oder eines Temperaturprofils für einen indirekten Rückschluss auf das Dickenprofil entlang der Querrichtung der Folienbahn quer zu einer Produktionsrichtung der Flachfolienmaschine auf. Weiter ist ein Vergleichsmodul für einen Vergleich wenigstens eines Teilabschnitts des erfassten Dickenprofils mit einem Vorgabeprofil vorgesehen. Darüber hinaus weist die Kontrollvorrichtung ein Bestimmungsmodul für ein Bestimmen zumindest einer lokalen Profilabweichung in einem Abweichungsabschnitt als Ergebnis des Vergleichs auf. Weiter ist ein Erzeugungsmodul für ein Erzeugen wenigstens eines Kontrolleingriffs für die Verstellung von wenigstens einem Stellmittel in einem von dem Abweichungsabschnitt unterschiedlichen Eingriffsabschnitt vorgesehen. Das Erfassungsmodul, das Vergleichsmodul, das Bestimmungsmodul und/oder das Erzeugungsmodul sind vorzugsweise für die Durchführung eines erfindungsgemäßen Verfahrens ausgebildet. Damit bringt eine erfindungsgemäße Kontrollvorrichtung die gleichen Vorteile mit sich, wie sie ausführlich mit Bezug auf ein erfindungsgemäßes Verfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine Ausführungsform einer erfindungsgemäßen Kontrollvorrichtung,
- Figur 2: eine Detaildarstellung der Austrittsdüse,
- Figur 3: eine Ausführungsform eines Dickenprofils,
- Figur 4: eine Ausführungsform eines Dickenprofils bei einer lokalen Profilabweichung,
- Figur 5: die Ausführungsform der Figur 4 mit Eingriffsmöglichkeiten,
- Figur 6: eine mögliche Korrelation der Eingriffsabschnitte und
- Figur 7: eine weitere mögliche Korrelation der Eingriffsabschnitte.

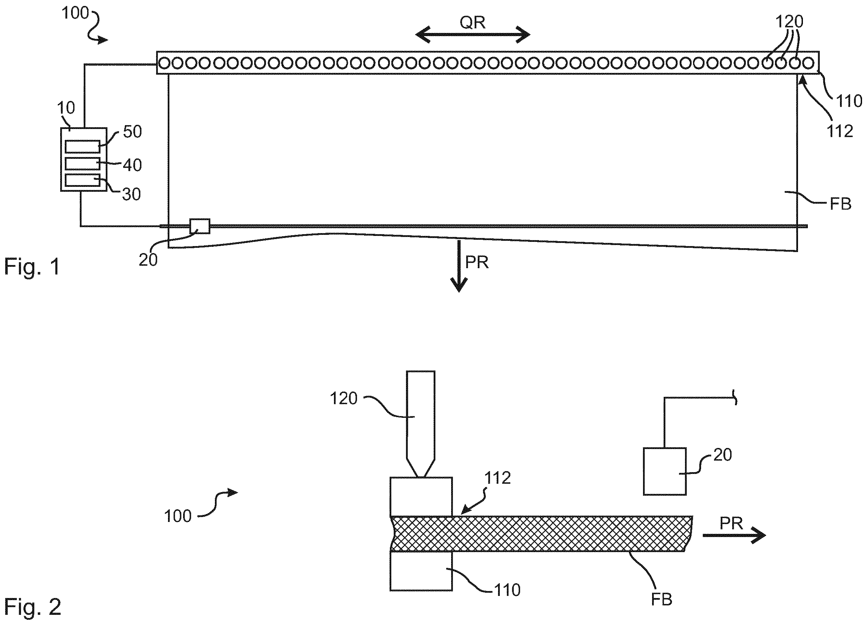

Figur 1 zeigt in der Draufsicht eine Möglichkeit einer Kontrollvorrichtung 10 bei einer Flachfolienmaschine 100. In der Draufsicht wird entlang der Produktionsrichtung PR eine Folienbahn FB aus einer Austrittsdüse 110 in Form von Extrusionsmaterial ausgebracht. Entlang der Produktionsrichtung PR verläuft diese Folienbahn FB nun über eine große Kühlwalze und über ein verlängertes Rollensystem, um abschließend auf einer Wickelwelle aufgewickelt zu werden. Über eine entsprechende Messmethode, hier ein Erfassungsmodul 20, ist es möglich, ein Dickenprofil DP der Folienbahn FB direkt oder indirekt zum Beispiel über ein Temperaturprofil zu überwachen. Dies kann kontinuierlich über die gesamte Breite in Querrichtung QR der Folienbahn FB zur Verfügung gestellt werden. Jedoch ist es auch denkbar, dass das Erfassungsmodul 20 einen verfahrbaren Sensor aufweist, welcher in einer Pendelbewegung entlang der Querrichtung QR von links nach rechts über die Folienbahn FB verfahren wird. Die Informationen aus dem Erfassungsmodul 20 werden innerhalb der Kontrollvorrichtung 10 zusammengeführt und anschließend im Vergleichsmodul 30 sowie im Bestimmungsmodul 40 verarbeitet. Die Verarbeitung wird später noch näher erläutert. Ausgehend vom Erzeugungsmodul 50 kann nun ein entsprechender Kontrolleingriff erzeugt werden und an die Flachfolienmaschine 100 zurückgekoppelt werden. Dieser Kontrolleingriff kann nun in verstellender Weise auf die Stellmittel 120, hier als Thermobolzen ausgebildet, einwirken, um dort in lokaler Weise eine Veränderung der Spaltöffnung 112 der Austrittsdüse 110 zu erzielen.

In Figur 2 ist eine Querschnittsdarstellung schematisch zu Figur 1 dargestellt. Hier ist gut zu erkennen, wie durch thermisches Beaufschlagen des Stellbolzens 120 dieser sich thermisch ausdehnen kann. Bei einer nicht dargestellten Widerlage, abgestützt auf der oberen Seite, führt dies dazu, dass die stiftartige Unterseite nun auf die obere Düsenlippe der Austrittsdüse 110 drückt, sodass entsprechend sich die Spaltöffnung 112 reduziert. In entgegengesetzter Richtung, also beim Abkühlen des Stellbolzens 120 verkürzt sich dieser, sodass durch den Gegendruck der Schmelze der Folienbahn FB die Spaltöffnung 112 sich wieder weiter öffnet und dementsprechend eine größere Dicke an diesem Abschnitt der Folienbahn FB möglich wird. Schematisch ist hier auch das Erfassungsmodul 20 dargestellt.

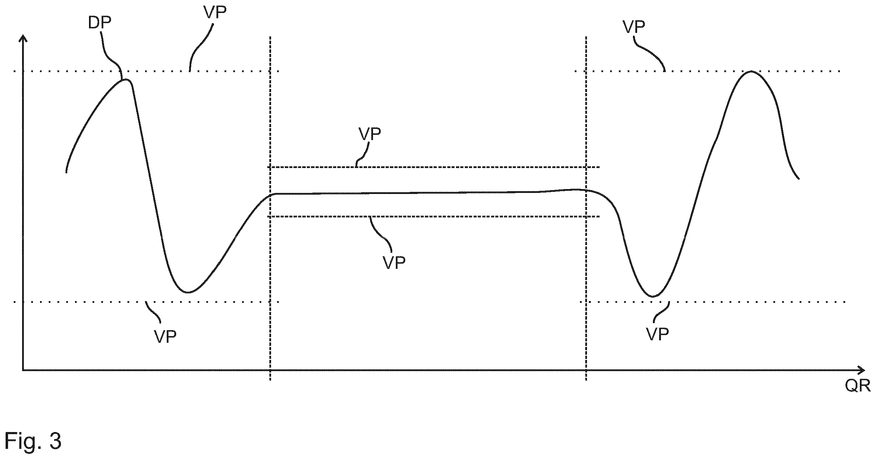

Figur 3 zeigt eine Lösung, wie ein Dickenprofil DP über die gesamte Querrichtung QR aussehen kann. Erfasst von einem Erfassungsmodul 20 sind hier zwei Randabschnitte links und rechts dargestellt, mit einer großen Dickstelle und einer entsprechenden Dünnstelle. Zwischen diesen beiden Randabschnitten verläuft eine kontinuierliche oder im Wesentlichen kontinuierliche Verlaufsform des Dickenprofils DP. Hier ist gut zu erkennen, dass das finale Folienprodukt FB üblicherweise nach Abschneiden der Randabschnitte erfolgt bzw. zur Verfügung gestellt wird. Deswegen können für die unterschiedlichen Abschnitte auch unterschiedliche Vorgabeprofile VP mit unterschiedlich breiten Schwellwerten zur Verfügung gestellt sein.

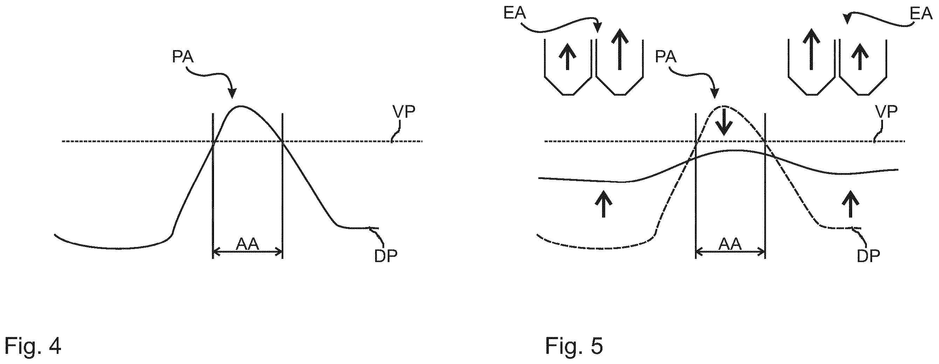

Die Figuren 4 und 5 zeigen nun die erfindungsgemäße Kontrolle. Wird an einer lokalen Stelle eine lokale Profilabweichung PA zum Beispiel durch Überschreiten des Vorgabeprofils VP erkannt, so ist dieser Abschnitt als Abweichungsabschnitt AA definiert. Durch einen Kontrolleingriff wird es nun möglich, links und rechts neben dem Abweichungsabschnitt AA, dargestellt in Figur 5, einen Eingriffsabschnitt EA zu definieren. Hier handelt es sich um eine Dickstelle im Abweichungsabschnitt AA, welche reduziert werden soll. Die gewünschte Veränderung des Dickenprofils DP ist hier anhand der Pfeile dargestellt, wobei die ursprüngliche Ausbildung des Dickenprofils DP in Figur 5 noch gestrichelt dargestellt ist. Um diese Wirkung zu erzielen, kann nun der Kontrolleingriff hier mit unterschiedlicher Quantität und gleichgerichteter Qualität in den beidseitig angrenzenden Eingriffsabschnitten EA die Stellmittel 120 nach oben verfahren, sodass entsprechend Platz geschaffen wird, um Schmelzematerial aus dem Abweichungsabschnitt AA in die benachbarten Eingriffsabschnitten EA umzuverteilen. Im Ergebnis verflacht sich das Dickenprofil DP auf die gewünschte Weise als Ergebnis der Kontrolle. Für Abweichungen im Randabschnitt der Folienbahn FB kann die Anordnung auch genau umgekehrt sein, so dass sich ein gemeinsamer Eingriffsabschnitt EA zwischen zwei Abweichungsabschnitten AA, insbesondere im Randabschnitt der Folienbahn FB, befindet.

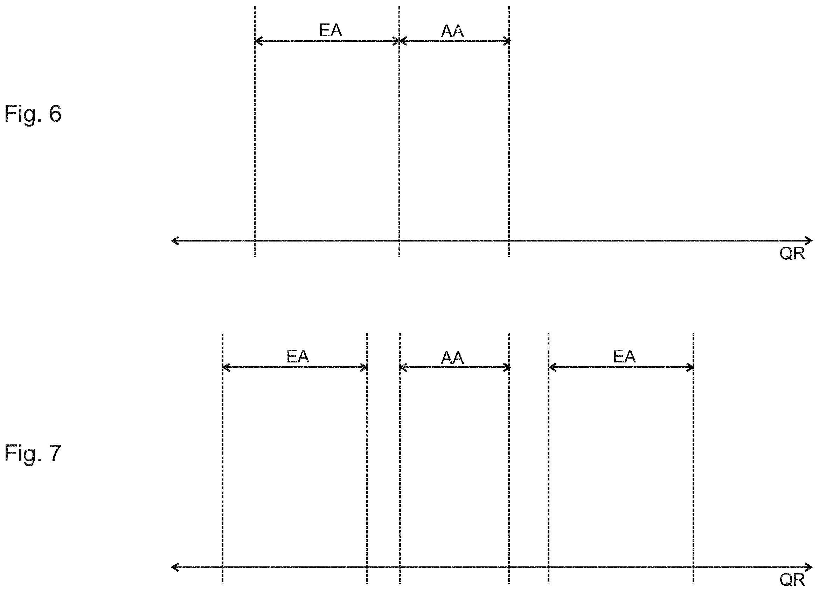

Die Figuren 6 und 7 zeigen unterschiedliche Korrelationen in örtlicher Weise. So kann gemäß Figur 6 zum Beispiel der Eingriffsabschnitt EA direkt oder im Wesentlichen direkt seitlich an einen Abweichungsabschnitt AA anschließen. Jedoch ist es auch denkbar, dass gemäß der Figur 7 eine entsprechende Beabstandung in Form eines Sicherheitsabstands zwischen Abweichungsabschnitt AA und Eingriffsabschnitt EA vorgesehen ist. Die Figur 7 zeigt darüber hinaus eine beidseitige Anordnung von zwei Eingriffsabschnitten EA, welche hier sogar in symmetrischer Weise ausgebildet sind.

### Bezugszeichenliste

- 10: Kontrollvorrichtung
- 20: Erfassungsmodul
- 30: Vergleichsmodul
- 40: Bestimmungsmodul
- 50: Erzeugungsmodul

- 100: Flachfolienmaschine
- 110: Austrittsdüse
- 112: Spaltöffnung
- 120: Stellmittel

- FB: Folienbahn
- DP: Dickenprofil
- VP: Vorgabeprofil
- PA: lokale Profilabweichung

- AA: Abweichungsabschnitt
- EA: Eingriffsabschnitt

- QR: Querrichtung
- PR: Produktionsrichtung

## Patentansprüche

1. Verfahren für die Kontrolle eines Dickenprofils (DP) einer Folienbahn (FB) entlang einer Querrichtung (QR) mittels einer Vielzahl von Stellmitteln (120) zum Stellen einer Spaltöffnung (112) einer Austrittsdüse (110) der Flachfolienmaschine (100), aufweisend die folgenden Schritte:
- Erfassen eines Dickenprofils (DP) entlang der Querrichtung (QR) der Folienbahn (FB) quer zu einer Produktionsrichtung (PR) der Flachfolienmaschine (100),
- Vergleich wenigstens eines Teilabschnitts des erfassten Dickenprofils (DP) mit einem Vorgabeprofil (VP),
- Bestimmen zumindest einer lokalen Profilabweichung (PA) in einem Abweichungsabschnitt (AA) als Ergebnis des Vergleichs,
- Erzeugen wenigstens eines Kontrolleingriffs für die Verstellung von wenigstens einem Stellmittel (120) in einem von dem Abweichungsabschnitt (AA) unterschiedlichen Eingriffsabschnitt (EA),
wobei die Quereinflüsse beim Durchführen des Kontrolleingriffs vorab ermittelt und im Kontrolleingriff selbst berücksichtigt werden, sodass eine unerwünschte Kontrollschwingung und/oder Regelschwingungen reduziert oder sogar gänzlich vermieden werden,
und wobei beim Erzeugen des Kontrolleingriffs ein zeitlich vorgelagert erfolgter Kontrolleingriff berücksichtigt wird.

2. Verfahren nach Anspruch 1, **dadurch gekennzeichnet, dass** der Eingriffsabschnitt (EA) entlang der Querrichtung (QR) eine unterschiedliche Erstreckung, insbesondere eine größere Erstreckung, als der Abweichungsabschnitt (AA) aufweist.

3. Verfahren nach einem der voranstehenden Ansprüche, **dadurch gekennzeichnet, dass** im Eingriffsabschnitt (EA) wenigstens zwei Stellmittel (120) durch den Kontrolleingriff verstellt werden, insbesondere mit unterschiedlicher Stellquantität.

4. Verfahren nach einem der voranstehenden Ansprüche, **dadurch gekennzeichnet, dass** der Eingriffsabschnitt (EA) mit dem Abweichungsabschnitt (AA) in Querrichtung (QR) der Folienbahn (FB) überlappt.

5. Verfahren nach einem der voranstehenden Ansprüche, **dadurch gekennzeichnet, dass** der Eingriffsabschnitt (EA) direkt oder im Wesentlichen direkt an den Abweichungsabschnitt (AA) in Querrichtung (QR) der Folienbahn (FB) angrenzt, und/oder dass der Eingriffsabschnitt (EA) von dem Abweichungsabschnitt (AA) in Querrichtung (QR) der Folienbahn (FB) beabstandet ist.

6. Verfahren nach einem der voranstehenden Ansprüche, **dadurch gekennzeichnet, dass** im Eingriffsabschnitt (EA) eine Gruppe von wenigstens zwei benachbarten Stellmitteln (120) durch den Kontrolleingriff verstellt werden.

7. Verfahren nach einem der voranstehenden Ansprüche, **dadurch gekennzeichnet, dass** der Kontrolleingriff auf wenigstens zwei Eingriffsabschnitte (EA) auf unterschiedlichen Seiten des Abweichungsabschnitts (AA) in Querrichtung (QR) einwirkt oder der Kontrolleingriff auf einen gemeinsamen Eingriffsabschnitt (EA) zwischen zwei Abweichungsabschnitten (AA) in Querrichtung (QR) einwirkt.

8. Verfahren nach Anspruch 7, **dadurch gekennzeichnet, dass** der Kontrolleingriff und/oder die wenigstens zwei Eingriffsabschnitte (EA) symmetrisch oder im Wesentlichen symmetrisch in Querrichtung (QR) zu dem Abweichungsabschnitt (AA) ausgebildet sind oder die beiden Abweichungsabschnitte (AA) symmetrisch um den einen gemeinsamen Eingriffsabschnitt (EA) ausgebildet sind.

9. Verfahren nach einem der voranstehenden Ansprüche, **dadurch gekennzeichnet, dass** der Abweichungsabschnitt (AA) frei von einem eigenen Kontrolleingriff bleibt, und/oder **dass** der Abweichungsabschnitt (AA) einen eigenen Kontrolleingriff aufweist.

10. Verfahren nach einem der voranstehenden Ansprüche, **dadurch gekennzeichnet, dass** wenigstens zwei Kontrolleingriffe an zwei unterschiedlichen Eingriffsabschnitten (EA) zeitlich parallel oder zumindest zeitlich überlappend durchgeführt werden.

11. Verfahren nach einem der voranstehenden Ansprüche, **dadurch gekennzeichnet, dass** bei wenigstens zwei bestimmten lokalen Profilabweichungen (PA) eine Priorisierung der notwendigen Kontrolleingriffe erfolgt.

12. Verfahren nach einem der voranstehenden Ansprüche, **dadurch gekennzeichnet, dass** beim Erzeugen des Kontrolleingriffs der zeitliche Verlauf des Dickenprofils (DP) berücksichtigt wird.

13. Verfahren nach einem der voranstehenden Ansprüche, **dadurch gekennzeichnet, dass** bei der Erzeugung des Kontrolleingriffs der Zeitbedarf für die Verstellung der Stellmittel (120) berücksichtigt wird.

14. Kontrollvorrichtung (10) für die Durchführung eines Verfahrens für die Kontrolle eines Dickenprofils (DP) einer Folienbahn (FB) entlang einer Querrichtung (QR) mittels einer Vielzahl von Stellmitteln (120) zum Stellen einer Spaltöffnung (112) einer Austrittsdüse (110) der Flachfolienmaschine (100), aufweisend ein Erfassungsmodul (20) für ein Erfassen eines Dickenprofils (DP) entlang der Querrichtung (QR) der Folienbahn (FB) quer zu einer Produktionsrichtung (PR) der Flachfolienmaschine (100), ein Vergleichsmodul (30) für einen Vergleich wenigstens eines Teilabschnitts des erfassten Dickenprofils (DP) mit einem Vorgabeprofil (VP), ein Bestimmungsmodul (40) für ein Bestimmen zumindest einer lokalen Profilabweichung (PA) in einem Abweichungsabschnitt (AA) als Ergebnis des Vergleichs, weiter aufweisend ein Erzeugungsmodul (50) für ein Erzeugen wenigstens eines Kontrolleingriffs für die Verstellung von wenigstens einem Stellmittel (120) in einem von dem Abweichungsabschnitt (AA) unterschiedlichen Eingriffsabschnitt (EA), wobei das Erfassungsmodul (20), das Vergleichsmodul (30), das Bestimmungsmodul (40) und/oder das Erzeugungsmodul (50) für die Durchführung eines Verfahrens mit den Merkmalen eines der Ansprüche 1 bis 13 ausgebildet sind.

## Claims

1. Method for controlling a thickness profile (DP) of a film track (FB) along a transverse direction (QR) by means of a plurality of adjusting means (120) for adjusting a slot opening (112) of a discharge nozzle (110) of the flat film machine (100), comprising the following steps:
- acquiring a thickness profile (DP) along the transverse direction (QR) of the film track (FB) transverse to a production direction (PR) of the flat film machine (100),
- comparing at least a partial section of the acquired thickness profile (DP) with a preset profile (VP),
- determining at least one local profile deviation (PA) in a deviation section (AA) as a result of the comparison,
- generating at least one controlling intervention for the adjustment of at least one adjusting means (120) in an intervention section (EA) different from the deviation section (AA),
wherein the cross influences are determined in advance when carrying out the controlling intervention and are taken into account in the controlling intervention itself, such that an undesired control oscillation and/or regulating oscillations are reduced or even completely avoided,
and wherein a temporally preceding controlling intervention is taken into account when generating the controlling intervention.

2. Method according to claim 1, **characterized in that** the intervention section (EA) has a different extension along the transverse direction (QR), in particular a greater extension, than the deviation section (AA).

3. Method according to any one of the preceding claims, **characterized in that** at least two adjusting means (120) are adjusted by the controlling intervention in the intervention section (EA), in particular with different adjustment quantities.

4. Method according to any one of the preceding claims, **characterized in that** the intervention section (EA) overlaps with the deviation section (AA) in the transverse direction (QR) of the film track (FB).

5. Method according to any one of the preceding claims, **characterized in that** the intervention section (EA) is directly or substantially directly adjacent to the deviation section (AA) in the transverse direction (QR) of the film track (FB), and/or **in that** the intervention section (EA) is spaced apart from the deviation section (AA) in the transverse direction (QR) of the film track (FB).

6. Method according to any one of the preceding claims, **characterized in that** in the intervention section (EA) a group of at least two adjacent adjusting means (120) are adjusted by the controlling intervention.

7. Method according to any one of the preceding claims, **characterized in that** the controlling intervention acts on at least two intervention sections (EA) on different sides of the deviation section (AA) in the transverse direction (QR) or the controlling intervention acts on a common intervention section (EA) between two deviation sections (AA) in the transverse direction (QR).

8. Method according to claim 7, **characterized in that** the controlling intervention and/or the at least two intervention sections (EA) are formed symmetrically or substantially symmetrically in the transverse direction (QR) relative to the deviation section (AA) or the two deviation sections (AA) are formed symmetrically about the one common intervention section (EA).

9. Method according to any one of the preceding claims, **characterized in that** the deviation section (AA) remains free of its own controlling intervention, and/or **in that** the deviation section (AA) has its own controlling intervention.

10. Method according to any one of the preceding claims, **characterized in that** at least two controlling interventions are carried out at two different intervention sections (EA) in parallel or at least overlapping in time.

11. Method according to any one of the preceding claims, **characterized in that** the necessary controlling interventions are prioritized in the case of at least two specific local profile deviations (PA).

12. Method according to any one of the preceding claims, **characterized in that** the progression over time of the thickness profile (DP) is taken into account when generating the controlling intervention.

13. Method according to any one of the preceding claims, **characterized in that,** when generating the controlling intervention, the time required for the adjustment of the adjusting means (120) is taken into account.

14. Control device (10) for carrying out a method for controlling a thickness profile (DP) of a film track (FB) along a transverse direction (QR) by means of a plurality of adjusting means (120) for adjusting a slot opening (112) of a discharge nozzle (110) of the flat film machine (100), having a detection module (20) for detecting a thickness profile (DP) along the transverse direction (QR) of the film track (FB) transverse to a production direction (PR) of the flat film machine (100), a comparison module (30) for comparing at least one partial section of the detected thickness profile (DP) with a preset profile (VP), a determination module (40) for determining at least one local profile deviation (PA) in a deviation section (AA) as a result of the comparison, further having a generation module (50) for generating at least one controlling intervention for the adjustment of at least one adjusting means (120) in an intervention section (EA) different from the deviation section (AA), wherein the detection module (20), the comparison module (30), the determination module (40), and/or the generation module (50) are configured to carry out a method having the features of any one of claims 1 to 13.

## Revendications

1. Procédé pour le contrôle d'un profil d'épaisseur (DP) d'une bande de film (FB) dans une direction transversale (QR) au moyen d'une pluralité de moyens de réglage (120) destinés à régler l'ouverture de fente (112) d'une buse de sortie (110) d'une machine à film plat (100), présentant les étapes suivantes :
- détection d'un profil d'épaisseur (DP) le long de la direction transversale (QR) de la bande de film (FB) transversalement à une direction de production (PR) de la machine à film plat (100),
- comparaison d'au moins une section partielle du profil d'épaisseur détecté (DP) avec un profil de consigne (VP),
- détermination d'au moins un écart de profil local (PA) dans une section d'écart (AA) en tant que résultat de la comparaison,
- génération d'au moins une intervention de contrôle pour le réglage d'au moins un moyen de réglage (120) dans une section d'intervention (EA) différente de la section d'écart (AA),
dans lequel les influences transversales lors de la mise en oeuvre de l'intervention de contrôle sont préalablement déterminées et prises en compte dans l'intervention de contrôle même, de sorte qu'une oscillation de contrôle indésirable et/ou des oscillations de régulation sont réduites, voire totalement évitées,
et dans lequel une intervention de contrôle effectuée en amont dans le temps est prise en compte lors de la génération de l'intervention de contrôle.

2. Procédé selon la revendication 1, **caractérisé en ce que** la section d'intervention (EA) présente, le long de la direction transversale (QR), une extension différente, en particulier une extension plus grande, que la section d'écart (AA).

3. Procédé selon l'une quelconque des revendications précédentes, **caractérisé en ce que,** dans la section d'intervention (EA), au moins deux moyens de réglage (120) sont déplacés par l'intervention de contrôle, en particulier avec une quantité de réglage différente.

4. Procédé selon l'une quelconque des revendications précédentes, **caractérisé en ce que** la section d'intervention (EA) chevauche la section d'écart (AA) en direction transversale (QR) de la bande de film (FB).

5. Procédé selon l'une quelconque des revendications précédentes, **caractérisé en ce que** la section d'intervention (EA) est directement ou sensiblement directement adjacente à la section d'écart (AA) en direction transversale (QR) de la bande de film (FB), et/ou **en ce que** la section d'intervention (EA) est espacée de la section d'écart (AA) en direction transversale (QR) de la bande de film (FB).

6. Procédé selon l'une quelconque des revendications précédentes, **caractérisé en ce que,** dans la section d'intervention (EA), un groupe d'au moins deux moyens de réglage adjacents (120) est déplacé par l'intervention de contrôle.

7. Procédé selon l'une quelconque des revendications précédentes, **caractérisé en ce que** l'intervention de contrôle agit sur au moins deux sections d'intervention (EA) sur des côtés différents de la section d'écart (AA) en direction transversale (QR) ou l'intervention de contrôle agit sur une section d'intervention commune (EA) entre deux sections d'écart (AA) en direction transversale (QR).

8. Procédé selon la revendication 7, **caractérisé en ce que** l'intervention de contrôle et/ou les au moins deux sections d'intervention (EA) sont symétriques ou sensiblement symétriques en direction transversale (QR) par rapport à la section d'écart (AA) ou les deux sections d'écart (AA) sont symétriques autour de l'une section d'intervention commune (EA).

9. Procédé selon l'une quelconque des revendications précédentes, **caractérisé en ce que** la section d'écart (AA) reste exempte d'une intervention de contrôle propre et/ou **en ce que** la section d'écart (AA) présente une intervention de contrôle propre.

10. Procédé selon l'une quelconque des revendications précédentes, **caractérisé en ce qu'**au moins deux interventions de contrôle sont mises en oeuvre en parallèle dans le temps ou au moins en chevauchement dans le temps sur deux sections d'intervention (EA) différentes.

11. Procédé selon l'une quelconque des revendications précédentes, **caractérisé en ce qu'**une priorisation des interventions de contrôle nécessaires est effectuée pour au moins deux écarts de profil locaux (PA) déterminés.

12. Procédé selon l'une quelconque des revendications précédentes, **caractérisé en ce que** lors de la génération de l'intervention de contrôle, l'évolution temporelle du profil d'épaisseur (DP) est prise en compte.

13. Procédé selon l'une quelconque des revendications précédentes, **caractérisé en ce que** lors de la génération de l'intervention de contrôle, le temps nécessaire au réglage des moyens de réglage (120) est pris en compte.

14. Dispositif de contrôle (10) pour la mise en œuvre d'un procédé de contrôle d'un profil d'épaisseur (DP) d'une bande de film (FB) le long d'une direction transversale (QR) au moyen d'une pluralité de moyens de réglage (120) pour régler une ouverture de fente (112) d'une buse de sortie (110) de la machine à film plat (100), présentant un module de détection (20) pour une détection d'un profil d'épaisseur (DP) le long de la direction transversale (QR) de la bande de film (FB) transversalement à une direction de production (PR) de la machine à film plat (100), un module de comparaison (30) pour une comparaison d'au moins une section partielle du profil d'épaisseur détecté (DP) avec un profil de consigne (VP), un module de détermination (40) pour une détermination d'au moins un écart de profil local (PA) dans une section d'écart (AA) en tant que résultat de la comparaison, présentant en outre un module de génération (50) pour une génération d'au moins une intervention de contrôle pour le réglage d'au moins un moyen de réglage (120) dans une section d'intervention (EA) différente de la section d'écart (AA), dans lequel le module de détection (20), le module de comparaison (30), le module de détermination (40) et/ou le module de génération (50) sont conçus pour mettre en œuvre un procédé avec les caractéristiques des revendications 1 à 13.
